# EUROPÄISCHE PATENTANMELDUNG

(11) **EP 0 769 416 A1**
(43) Veröffentlichungstag der Anmeldung: **23.04.1997**
(21) Anmeldenummer: 95103719.1
(22) Anmeldetag: 15.03.1995
(51) Int. Cl.: B60N 3/02

(54) **Haltestange**

(71) Anmelder: Ignaz Vogel GmbH & Co KG, Fahrzeugsitze, D-76228 Karlsruhe (DE)
(72) Erfinder: Vogel, Ignaz, D-76228 Karlsruhe (DE)
(74) Vertreter: Trappenberg, Hans

(57) **Zusammenfassung**

Eine Haltestange 1, 2, 3, 4, 5 für Fahrgäste in einem Fahrzeug, insbesondere zur Verwendung in einem Bus, welche sich vom oberen Bereich des Fahrzeugs bis zum Fahrzeugboden erstreckt, weist wenigstens ein Gelenk 1, 2 auf, mittels welchem die mit dem Gelenk verbundenen Teile 3, 4, 5 der Haltestange 1, 2, 3, 4, 5 in einem Winkel zueinander verbracht werden können.

## Beschreibung

Die Erfindung betrifft eine Haltestange für Fahrgäste in einem Fahrzeug, insbesondere zur Verwendung in einem Bus, welche sich vom oberen Bereich des Fahrzeugs bis zum Fahrzeugboden erstreckt.

Eine derartige Haltestange ist im Stand der Technik hinreichend bekannt und findet insbesondere bei Fahrzeugen des öffentlichen Personennahverkehrs Verwendung. Sie ist regelmäßig im Bereich der Türen angeordnet, damit Fahrgäste beim Ein- und Aussteigen sich daran festhalten können. Haltestangen finden sich aber auch an den Stellen des Fahrzeugs, wo es vorteilhaft ist, Fahrgästen einen Halt zur Verfügung zu stellen.

Durch die unterschiedlichen Einbauorte ist es erforderlich, die Haltestange an die jeweiligen Gegebenheiten anzupassen. So ist es bei der Ausrüstung eines Busses mit Haltestangen in der Regel erforderlich, eine Vielzahl von unterschiedlichen Haltestangen herzustellen.

Da die Anpassung der Haltestange an die betreffende Gegebenheit vor Ort geschieht, gestaltet sich die Montage recht schwierig und zeitaufwendig. Will man auf vorangepaßte Haltestangen zurückgreifen, kommt der Nachteil einer aufwendigen Lagerhaltung hinzu, da eine Vielzahl unterschiedlicher Typen im Lager bereitgehalten werden müssen.

Es ist Aufgabe der Erfindung, eine eingangs genannte Haltestange derart auszubilden, daß sie auf einfache Art und Weise in einem Fahrzeug eingebaut werden kann und sich die Lagerhaltung vereinfacht.

Die Lösung dieser Aufgabe ergibt sich aus den Merkmalen des kennzeichnenden Teils des Anspruchs 1. Vorteilhafte Weiterbildungen der Erfindung ergeben sich aus den Unteransprüchen.

Gemäß der Erfindung weist die Haltestange wenigstens ein Gelenk auf, mittels welchem die mit dem Gelenk verbundenen Teile der Haltestange in einem Winkel zueinander verbracht werden können. Besonders günstig ist es, wenn zwei Gelenke vorgesehen sind, da die Endteile der Haltestange dann in paralleler Richtung zueinander angeordnet werden können.

In vorteilhafter Weise sind die Gelenke arretierbar ausgebildet. Eine derartige Haltestange läßt sich auf einfache Art und Weise an unterschiedliche Fahrzeug-Bauformen anpassen. Es ist hierzu lediglich eine Verstellung der Gelenke notwendig und gegebenenfalls eine Kürzung eines Endteils der Haltestange. Statt mühsamer Biegearbeiten kann die Haltestange nun mittels leichter Verstellung der Gelenke in die erforderliche Form gebracht werden.

Während früher derartige Stützen regelmäßig abhängig vom Einbauort individuell hergestellt werden mußten, kann nun eine universal ausgebildete Stütze verwendet werden. Die Anpassung an den Einbauort kann auf einfache Art und Weise durch Verstellen der Gelenke geschehen. Dies hat nicht nur den Vorteil, daß für nahezu alle möglichen Gegebenheiten eine einheitliche Stütze verwendet werden kann, was sich besonders günstig auf die Herstellungskosten und die Lagerhaltung auswirkt, sondern durch die Gelenke ist das einfache Verändern der Geometrie der Stütze und damit eine Anpassung der Stütze an die Gegebenheiten vor Ort sehr schnell und einfach möglich. Sind die Gelenke arretierbar ausgebildet, wie dies eine besondere Ausführungsform der Erfindung vorsieht, kann die Stütze besonders gut für den Einbau vorbereitet werden, und zudem erhöht sich die Festigkeit der Stütze.

Um einen möglichst großen Spielraum zur Anwendung der erfindungsgemäß ausgebildeten Stütze zu erhalten, ist ein Ende der Stütze länger ausgebildet als es für die meisten Anwendungsfälle sein müßte. Die Anpassung an den Einbauort erfolgt dann dadurch, daß nach der Einstellung der Gelenke das betreffende Ende der Stütze auf die benötigte Länge gekürzt wird. Die Befestigung der Stütze mit dem Fahrzeugboden kann auf herkömmliche Art und Weise mittels Bodenlager geschehen.

Bei einer besonderen Ausführungsform der Erfindung ist die Haltestange rohrförmig ausgebildet, wodurch eine Signalleitung durch das Innere der Haltestange geführt werden kann. Es ist daher möglich, an der Haltstange einen Signalgeber anzuordnen. Bei einer derart ausgebildeten Haltestange ist es besonders günstig, wenn die Gelenke ebenfalls einen Hohlraum aufweisen, mittels dem die Signalleitung durch die Gelenke geführt werden kann.

Als besonders vorteilhaft zur Befestigung der Halterung an der Fahrzeugdecke hat sich eine Profilschiene erwiesen, welche sich in einem Abstand etwa parallel zur Decke des Fahrzeugs erstreckt und an welcher die Haltestange befestigt ist. Zur Befestigung der Haltestange weist die Profilschiene wenigstens an der der Decke abgewandten Seite eine T-förmige Nut auf. Die Befestigung der Haltestange an die Profilschiene geschieht in vorteilhafter Weise mittels eines in der Nut angeordneten Gleitstücks, welches so ausgebildet sein kann, daß es in der Nut arretierbar ist. Das Gleitstück kann als sogenannter Gewindestein ausgebildet sein, wodurch die Arretierung des Gleitstücks in der Nut mittels einer Klemmung erfolgen kann.

Die Haltestange kann hierdurch mittels eines Gewindebolzens, welcher an einem Ende der Haltestange angeordnet ist, mit der Profilschiene verbunden werden. Durch die Profilschiene läßt sich die Haltestange auf einfache Art und Weise an einem beliebigen Ort des Fahrzeugs befestigen.

Weist die Profilschiene an der der Decke zugewandten Seite eine T-förmige Nut auf, wie dies eine weitere besondere Ausführungsform der Erfindung vorsieht, läßt sich die Profilschiene auf einfache Art und Weise mit der Fahrzeugdecke verbinden. Hierzu werden in die der Fahrzeugdecke zugewandte Nut als Gewindesteine ausgebildete Gleitstücke eingebracht, mittels welcher die Profilschiene beispielsweise an Halteböcke, welche ihrerseits an der Fahrzeugdecke befestigt sind, angebracht werden kann.

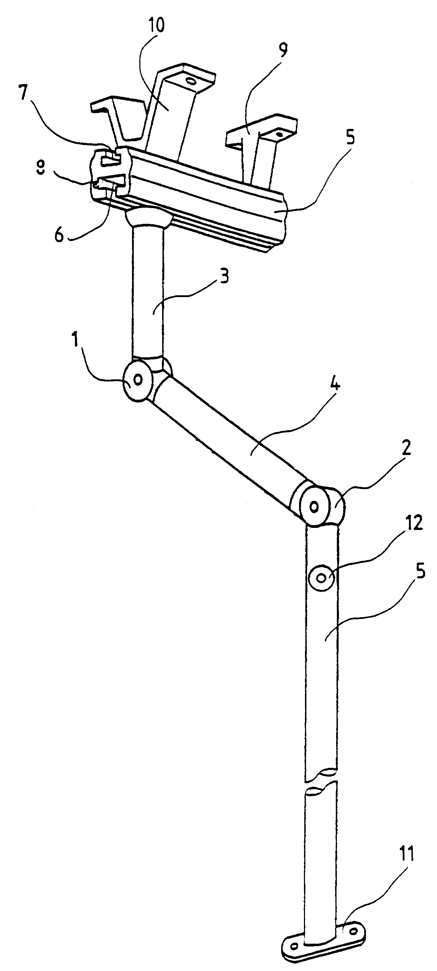

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung.

Es zeigt die einzige Figur eine erfindungsgemäße Haltestange.

Eine Profilschiene 5, welche nur abschnittsweise gezeigt ist, ist mittels Halteböcken 9, 10 an der Decke eines Fahrzeugs zur Personenbeförderung befestigbar. Die Profilschiene 5 weist an der der Decke abgewandten Seite eine T-förmige Nut 6 und an der der Decke zugewandten Seite eine T-förmige Nut 7 auf. In den T-förmigen Nuten sind Gleitstücke angeordnet, welche eine Gewindebohrung aufweisen, mittels der zum einen die Halteböcke 9, 10 mit ihnen verbunden werden können. Die Gleitstücke und die Halteböcke 9, 10 sind so ausgebildet, daß sich bei der Verbindung der Halteböcke 9, 10 mit den Gewindesteinen eine Klemmung ergibt, wodurch die Gleitstücke in der T-förmigen Nut arretiert sind. Die Halteböcke 9, 10 können als Bügel 10 oder Stütze 9 ausgebildet sein.

In der der Decke abgewandten T-förmigen Nut 6 befinden sich ebenfalls Gleitstücke. Mittels dieser Gleitstücke ist eine Haltestange 1, 2, 3, 4, 5 an der Profilschiene 5 befestigbar.

Die Haltestange 1, 2, 3, 4, 5 weist Gelenke 1, 2 auf, mittels welcher die mit den Gelenken 1, 2 verbundenen Teile 3, 4, 5 der Haltestange 1, 2, 3, 4, 5 in einen Winkel verbracht werden können. Das obere Teil 3 der Haltestange 1, 2, 3, 4, 5 weist an seinem dem Gelenk 3 abgewandten Ende einen Gewindestift auf, mittels welchem es in die Gewindebohrung des Gleitstücks eingeschraubt ist. Die Gewindeverbindung ist so ausgebildet, daß das Gleitstück in der T-förmigen Nut 6 sich in ihr klemmend befindet. Durch die Klemmung ist die Haltestange 1, 2, 3, 4, 5 arretiert und kann nicht mehr innerhalb der T-förmigen Nut 6 verschoben werden. Das untere Ende 5 der Haltestange 1, 2, 3, 4, 5 ist mittels eines Bodenlagers 11 am Fahrzeugboden befestigbar. Durch die Gelenke 1, 2 kann die Haltestange 1, 2, 3, 4, 5 so eingestellt werden, daß sie abhängig vom Einbauort die benötigte Form hat. Die Gelenke 1, 2 sind arretierbar ausgebildet.

Die Haltestange 1, 2, 3, 4, 5 weist einen Schalter 12 auf, mittels dem ein Fahrgast ein Signal geben kann. Die Verbindungsleitung des Schalters 12 wird innerhalb der Haltestange 1, 2, 3, 4, 5 geführt. Sie gelangt hierdurch in die T-förmige Nut 6 der Profilschiene 5. Zur Weiterführung der Leitung ist in der T-förmigen Nut 6 eine Ausnehmung 8 ausgebildet, welche zur Aufnahme der Leitung geeignet ist. Durch die Ausnehmung 8 kann die Zuleitung zum Schalter 12 an beliebige Stellen des Fahrzeugs geleitet werden.

## Patentansprüche

1. Haltestange für Fahrgäste in einem Fahrzeug, insbesondere zur Verwendung in einem Bus, welche sich vom oberen Bereich des Fahrzeugs bis zum Fahrzeugboden erstreckt,
dadurch gekennzeichnet,
daß die Haltestange (1, 2, 3, 4, 5) wenigstens ein Gelenk (1, 2) aufweist, mittels welchem die mit dem Gelenk verbundenen Teile (3, 4, 5) der Haltestange (1, 2, 3, 4, 5) in einen Winkel zueinander verbracht werden können.

2. Haltestange nach Anspruch 1,
dadurch gekennzeichnet,
daß das Gelenk (1, 2) arretierbar ausgebildet ist.

3. Haltestange nach Anspruch 1 oder 2,
dadurch gekennzeichnet,
daß die Haltestange (1, 2, 3, 4, 5) rohrförmig ausgebildet ist, zur Aufnahme einer Signalleitung.

4. Haltestange nach einem der
Ansprüche 1 bis 3,
dadurch gekennzeichnet,
daß die Haltestange (1, 2, 3, 4, 5) an einer Profilschiene (5) befestigt ist, welche in einem Abstand etwa parallel zur Decke angeordnet ist und wenigstens an der der Decke abgewandten Seite eine T-förmige Nut (6) aufweist.

5. Haltestange nach Anspruch 4,
dadurch gekennzeichnet,
daß die Haltestange (1, 2, 3, 4, 5) mittels eines in der Nut (6) angeordneten Gleitstücks an der Profilschiene (5) befestigt ist.

6. Haltestange nach Anspruch 5,
dadurch gekennzeichnet,
daß das Gleitstück in der Nut (6) arretierbar ist.

7. Haltestange nach einem der
Ansprüche 4 bis 6,
dadurch gekennzeichnet,
daß die Profilschiene (5) an der der Decke zugewandten Seite eine T-förmige Nut (7) aufweist.

8. Haltestange nach einem der
Ansprüche 4 bis 7,
dadurch gekennzeichnet,
daß in der Nut (6) eine Ausnehmung (8) vorgesehen ist, welche als Kanal ausgebildet und zur Aufnahme einer Signalleitung geeignet ist.
